# FASCICULE DE BREVET EUROPEEN

(11) **EP 1 287 715 B1**
(45) Date de publication et mention de la délivrance du brevet: **13.08.2008**
(21) Numéro de dépôt: 01940620.6
(22) Date de dépôt: 29.05.2001
(51) Int. Cl.: H04Q 7/32, H04B 7/26

(54) **SYSTEME DE LIAISON RADIOELECTRIQUE EN MILIEU CONFINE ENTRE TERMINAUX DE TELEPHONIE MOBILE**
FUNKVERBINDUNGSANORDNUNG IN ABGESCHLOSSENER UMGEBUNG ZWISCHEN MOBILTELEPHONENDGERÄTEN
RADIO SYSTEM IN CLOSED ENVIRONMENT BETWEEN MOBILE TELEPHONE SYSTEM TERMINALS

(30) Priorité: 09.06.2000 FR 0007434
(43) Date de publication de la demande: 05.03.2003
(73) Titulaire: TDF, 75015 Paris (FR)
(72) Inventeur: PELISSIER, Guy, F-42000 Saint-Etienne (FR); THIVILLON, Jean, F-01600 Trevoux (FR)
(74) Mandataire: Loisel, Bertrand
(86) Numéro de dépôt international: PCT/FR2001/001656
(87) Numéro de publication internationale: WO 2001/095650

(56) Documents cités:
- DE-A- 3 907 733
- US-A- 5 404 570

## Description

L'invention concerne un système de liaison radioélectrique en milieu confiné entre terminaux de téléphonie mobile.

La portée des terminaux de téléphonie mobile, fonctionnant dans les bandes de fréquences 80 - 160 MHz, reste très limitée en milieu confiné, en particulier dans les tunnels routiers ou ferroviaires, les galeries de mine, par nature longs, profonds et sinueux.

Afin de mieux remédier à un tel inconvénient et de permettre l'utilisation de ces terminaux de téléphonie mobile soit par des utilisateurs habituels tels que passagers de véhicules routiers ou ferroviaires, soit par des personnels de maintenance et d'intervention, les tunnels précités ou le cas échéant les galeries de mine précitées peuvent être équipés d'installations spécifiques, constituées par des câbles rayonnants et des amplificateurs relais, permettant d'assurer une liaison radioélectrique convenable entre chaque terminal de téléphonie mobile et une borne fixe de téléphonie cellulaire, placée à l'extérieur de la zone confinée correspondante. La liaison radioélectrique entre terminaux de radiotéléphonie mobile placés à, l'intérieur de la zone confinée est alors nécessairement effectuée par l'intermédiaire des installations spécifiques précitées et de la borne fixe de téléphonie cellulaire correspondante.

Toutefois, lors de pannes de ces installations spécifiques ou de très graves sinistres survenant dans ces milieux confinés, la destruction des câbles rayonnants précités sur plusieurs centaines de mètres rend toute liaison entre terminal de téléphonie mobile et l'extérieur et en conséquence avec tout autre terminal de téléphonie mobile situé à l'intérieur du milieu confiné totalement inopérante.

Une telle carence est en conséquence susceptible de retarder l'intervention de personnels habilités, à l'intérieur du milieu confiné, notamment en cas de sinistre.

Dans le but de remédier à l'inconvénient majeur précité, différents essais ont été effectués.

Parmi ceux-ci, la transmission directe en atmosphère confinée à des fréquences radioélectriques comprises entre 1 et 2 GHz s'est révélée envisageable, confer l'article intitulé « Characterization of UHF Radio propagation Channels in Tunnel Environments for microcellular and Personal Communications », publié par Y.P. CHANG and Y. HWANG, IEEE Transactions on Vehicular Technology, vol. 47, N°1, Février 1998.

Ce résultat a en outre été confirmé par la demande de brevet DE 3907733, laquelle décrit un procédé et un dispositif de communication en atmosphère confinée par liaison hyperfréquence en rayonnement polarisé horizontalement ou circulairement.

Alors que les résultats mentionnés dans l'article précité ont montré qu'une liaison directe était envisageable, en raison des conditions de propagation des ondes hyperfréquences en milieu confiné se rapprochant de la propagation guidée, les essais précités n'ont pas été suivis d'une approche industrielle opérationnelle, permettant de bénéficier de la souplesse et de la diversité des fonctionnalités des liaisons de radiotéléphonie mobile.

La présente invention a pour objet la mise en oeuvre d'un système de liaison radioélectrique en milieu confiné, entre terminaux de téléphonie mobile, présentant toutes les fonctionnalités de la téléphonie radiocellulaire mobile.

Un autre objet de la présente invention est également, outre la mise en oeuvre des fonctionnalités précitées, le maintien de liaisons radioélectriques de terminal à terminal de radiotéléphonie mobile, dans un périmètre restreint du milieu confiné, par une liaison simplex, à fréquence unique.

Le système de liaison radioélectrique en milieu confiné entre au moins un terminal de téléphonie mobile, émettant et recevant un signal radioélectrique à haute fréquence', et une borne fixe de téléphonie cellulaire, objet de la présente invention, est remarquable en ce qu'il comporte, en combinaison, un module portatif individuel connecté à ce terminal de téléphonie mobile et comportant un transpondeur hyperfréquence, ce module portatif individuel recevant le signal radioélectrique à haute fréquence émis par le terminal de téléphonie mobile et réémettant, dans le milieu confiné, un signal radioélectrique hyperfréquence, au moins une station relais transportable assurant une réamplification du signal radioélectrique hyperfréquence et une réémission, vers une ouverture libre du milieu confiné, d'un signal hyperfréquence amplifié, une station terminale munie d'un transpondeur placée au voisinage de cette ouverture libre.

Le système de liaison radioélectrique en milieu confiné, objet de la présente invention, trouve application lors de l'intervention de personnels habilités ou de sécurité dans des conditions périlleuses, dans les milieux confinés tels que tunnels, ferroviaires ou routiers, galeries de mines ou analogues.

Il sera mieux compris à la lecture de la description et à l'observation des dessins dans lesquels :
- la figure 1 représente, à titre illustratif, un système de liaison radioélectrique en milieu confiné entre terminal de téléphonie mobile, conforme à l'objet de la présente invention ;
- la figure 2 représente, à titre illustratif, un mode de réalisation particulier non limitatif d'un module portatif individuel permettant la mise en oeuvre du système objet de la présente invention tel que représenté en figure 1 ;
- la figure 3 représente, à titre illustratif, un mode de réalisation particulier non limitatif d'une station relais transportable, permettant la mise en oeuvre du système objet de la présente invention ;
- la figure 4 représente, à titre illustratif, un mode de réalisation particulier non limitatif d'une station terminale, permettant la mise en oeuvre du système objet de la présente invention ;
- la figure 5a représente, à titre d'exemple non limitatif, un premier mode de réalisation de la connexion du module portatif individuel au terminal de téléphonie mobile ;
- la figure 5b représente, à titre d'exemple non limitatif, un deuxième mode de réalisation préférentiel de la connexion du module portatif individuel au terminal de téléphonie mobile, permettant, au choix de l'utilisateur, soit une liaison de full duplex avec un autre terminal de téléphonie mobile, situé ou non dans le milieu confiné, soit une liaison simplex avec un autre terminal de téléphonie mobile, situé dans le milieu confiné, dans un périmètre restreint de ce terminal de téléphonie mobile.

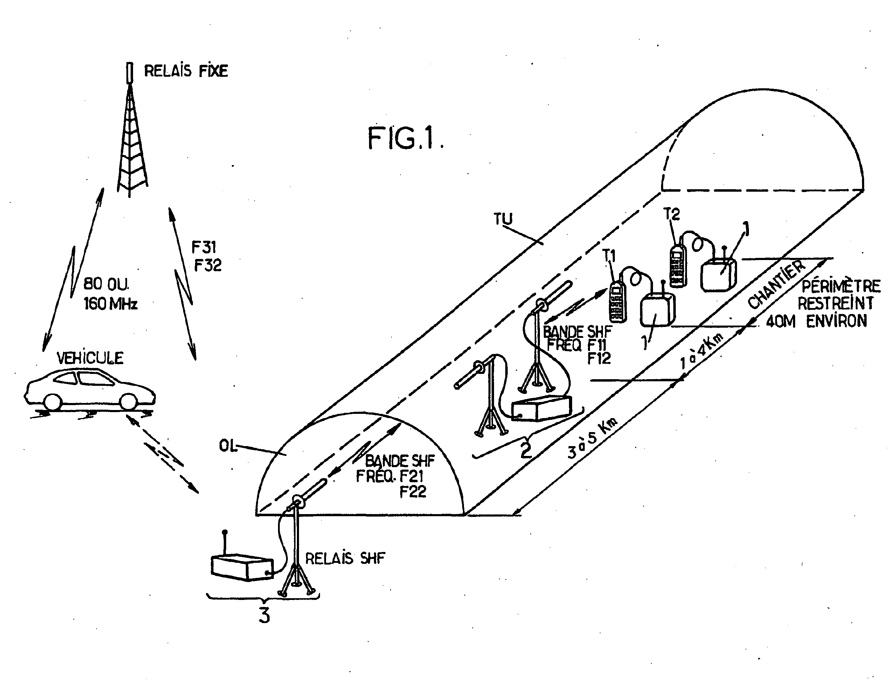

Une description plus détaillée d'un système de liaison radioélectrique en milieu confiné entre terminaux de téléphonie mobile sera maintenant donnée en liaison avec la figure 1 et les figures suivantes.

D'une manière générale, ainsi que représenté sur la figure 1 précitée, le système de liaison radioélectrique en milieu confiné entre au moins un terminal de téléphonie mobile, noté T₁, T₂, deux terminaux de téléphonie mobile étant représentés sur la figure précitée, émettant et recevant un signal radioélectrique à haute fréquence et une borne fixe de téléphonie cellulaire, notée Relais fixe, externe au milieu confiné précité, comporte, conformément à l'objet de la présente invention, en combinaison, un module 1 portatif individuel connecté à ce terminal de téléphonie mobile. Sur la figure 1, à titre d'exemple non limitatif, on a représenté un module portatif individuel 1 connecté à chacun des terminaux de téléphonie mobile T₁ et T₂ à titre purement illustratif. Chaque module portatif individuel 1 comporte un transpondeur hyperfréquence. Chaque module portatif individuel 1 reçoit le signal radioélectrique à haute fréquence, signal HF à 80 ou 160 MHz émis par le terminal de téléphonie mobile T₁, respectivement T₂, et réémet dans le milieu confiné un signal radioélectrique hyperfréquence dans la bande SHF comprise entre 2 et 3 GHz.

En outre, le système objet de la présente invention comporte au moins une station relais transportable, portant la référence 2, assurant une réamplification du signal radioélectrique hyperfréquence, c'est-à-dire du signal émis dans la bande SHF, et une réémission vers une ouverture libre du milieu confiné, ouverture libre notée OL, d'un signal radioélectrique hyperfréquence amplifié.

De manière non limitative et purement illustrative, on indique que, sur la figure 1, on a représenté le système de liaison radioélectrique en milieu confiné, objet de la présente invention, installé dans un tunnel, noté TU, tel qu'un tunnel routier ou ferroviaire par exemple, dont l'ouverture libre OL correspond à l'entrée du tunnel, alors que la longueur du tunnel est suffisamment importante pour considérer ce dernier comme fermé à l'autre extrémité.

En outre, une station terminale, notée 3, munie d'un transpondeur est placée au voisinage de l'ouverture libre OL précitée, cette station terminale 3 assurant la réception du signal radioélectrique hyperfréquence amplifié, la transposition de ce signal hyperfréquence amplifié en un signal transposé à haute fréquence dans la bande 80 - 160 MHz et l'émission de ce signal transposé en milieu non confiné vers la borne fixe de téléphonie cellulaire, notée Relais fixe.

En référence à la figure 1, on indique que le système de liaison radioélectrique tel que décrit précédemment permet d'assurer la liaison de tout terminal de téléphonie mobile, tel que T₁ ou T₂, avec le relais fixe constituant la borne fixe de téléphonie cellulaire précédemment mentionnée.

A titre d'exemple non limitatif, on indique que des essais ont été effectués dans le cadre d'une transmission en hyperfréquence, c'est-à-dire en bande SHF à 2,3 GHz, la liaison étant réalisée selon une voie ascendante de type simplex, la notion de voie ascendante recouvrant la liaison entre tout terminal de téléphonie mobile T₁ ou T₂ et le relais fixe précédemment mentionné.

Au cours des essais, les principales caractéristiques techniques des différents éléments précédemment décrits étaient les suivantes :
- fréquence émise par chaque terminal de téléphonie mobile : 80 MHz ou 160 MHz ;
- fréquence de sortie après transposition par le module portatif individuel 1 : 2025/2110 MHz ou 2200/2290 MHz ;
- puissance de sortie de chaque module portatif individuel après transposition : comprise entre 1 à 3 watts ;
- longueur des antennes hyperfréquence, en particulier longueur des antennes de la station relais transportable 2 et de la station terminale 3 : 5 cm.

Bien entendu, le mode de mise en oeuvre du système de liaison radioélectrique en milieu confiné objet de la présente invention, n'est pas limité à un mode de mise en oeuvre de type simplex à l'alternat, dans lequel une voie ascendante, le cas échéant descendante, est simplement installée.

Dans le but d'obtenir la totalité des fonctionnalités et de la diversité de ces dernières obtenue au moyen de terminaux de téléphonie mobile, et conformément à un aspect remarquable du système objet de la présente invention, chaque module portatif individuel 1, la station relais transportable 2 et la station terminale 3 permettent d'assurer leurs opérations en combinaison selon une voie de transmission ascendante, c'est-à-dire vers le relais fixe, respectivement selon une voie de transmission descendante, c'est-à-dire du relais fixe vers les terminaux T₁ et T₂ de téléphonie mobile placés en atmosphère confinée.

Dans ces conditions, la voie ascendante peut être mise en oeuvre à partir de chaque terminal de téléphonie mobile T₁ et/ou T₂ auxquels est associé le module portatif individuel 1, à la voie de transmission ascendante étant allouée une fréquence F₁₁ entre la station relais transportable 2 et chaque module portatif individuel 1, une fréquence F₂₁ entre la station relais transportable 2 et la station terminale 3 par exemple, et une fréquence à haute fréquence F₃₁ entre la station intermédiaire 3 et la borne relais fixe précitée. Au contraire, pour la voie descendante, une fréquence F₃₂ est allouée entre le relais constituant la borne cellulaire de téléphonie cellulaire fixe, entre cette dernière et la station terminale 3, une fréquence SHF F₂₂ entre la station terminale 3 et la station relais transportable 2, une fréquence F₁₂ entre la station relais transportable 2 et chacun des modules portatifs individuels 1 associé à chacun des terminaux de téléphonie mobile T₁ et T₂. On comprend en particulier que des modes de communication tels que le mode de communication bilatérale par exemple, ou le cas échéant le mode de communication full duplex, peuvent être alloués dans ces conditions grâce à la voie montante et à la voie descendante. Les transpositions de fréquence peuvent être effectuées par changement de fréquence à partir d'une fréquence d'oscillateur local unique. Dans ces conditions, les fréquences SHF allouées à la voie montante et à la voie descendante diffèrent de la même valeur que les fréquences HF correspondantes.

Dans les conditions d'expérimentation précitées, on indique qu'une liaison dans des conditions totalement acceptables a pu être mise en oeuvre pour des distances séparant les terminaux de téléphonie mobile et les modules portatifs individuels 1 associés à ces derniers de la station relais, transportable 2 sur une distance de 1 à 4 km, alors que la distance séparant la station relais transportable 2 de la station terminale 3, placée à l'ouverture libre du tunnel OL, était de l'ordre de 3 à 5 km.

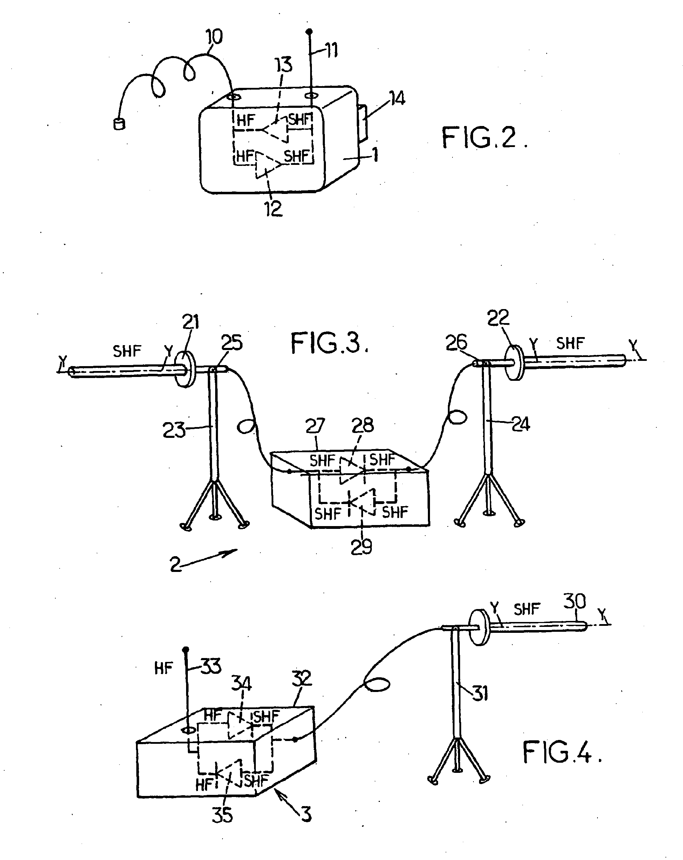

Une description plus détaillée des éléments constitutifs du système de liaison radioélectrique en milieu confiné, objet de la présente invention, sera maintenant donnée en liaison avec les figures 2, 3 et 4.

Ainsi que représenté sur la figure 2, chaque module portatif individuel 1 peut comprendre, dans un boîtier étanche, un ou deux transpondeurs portant les références 12, 13, et représentés par un amplificateur/ mélangeur assurant un changement de fréquence entre le signal haute fréquence HF et le signal hyperfréquence SHF, respectivement le signal hyperfréquence SHF et le signal hyperfréquence HF. Les transpondeurs précités sont connectés par l'intermédiaire d'un câble coaxial de connexion 10, d'une part, au terminal de téléphonie mobile T₁, respectivement T₂, respectivement à une antenne omnidirectionnelle 11 assurant la transmission et la réception du signal SHF constitutif de la voie de transmission ascendante, respectivement de la voie de transmission descendante. Enfin, chaque boîtier peut être muni d'un système d'accrochage 14 permettant à tout intervenant de fixer le boîtier précité, et en définitive le module portatif individuel 1 correspondant, à toute partie de son équipement adaptée à cet effet. Dans ces conditions, la liaison par le câble coaxial 10 au terminal de téléphonie mobile correspondant T₁ ou T₂ permet alors à chaque intervenant d'utiliser ce dernier de manière transparente, compte non tenu de l'existence du module portatif individuel 1 précité.

Bien entendu, l'alimentation électrique de chaque module portatif individuel peut être assurée par des batteries rechargeables de manière connue en tant que telle, qui, pour cette raison, ne sera pas décrite en détail.

En ce qui concerne la station relais transportable 2, celle-ci peut comprendre, ainsi que représenté en figure 3, au moins une antenne réceptrice et une antenne émettrice constituées chacune par une antenne directionnelle dont la direction principale du lobe de rayonnement en émission/réception, notée Y-Y, correspond sensiblement à la direction longitudinale du milieu confiné.

Ainsi que représenté en figure 3, on comprend que chaque antenne émettrice et/ou réceptrice portant la référence 21, 22, comprend une direction principale de lobe de rayonnement, notée Y-Y, chaque antenne 21 ou 22 étant montée sur un trépied 23, 24 par l'intermédiaire d'une rotule d'orientation 25, 26, ce qui permet d'orienter chaque antenne, et en particulier la direction principale du lobe de rayonnement de celle-ci, sensiblement dans la direction longitudinale du milieu confiné, afin d'assurer des conditions de propagation se rapprochant le plus possible des conditions de propagation guidée pour le signal SHF, respectivement le signal SHF amplifié. Chaque antenne est reliée par un fil de connexion de type câble coaxial à un boîtier étanche 27, lequel comporte des amplificateurs hyperfréquence, représentés par 28 et 29, assurant l'amplification du signal SHF selon la voie montante, respectivement descendante. Bien entendu, le boîtier 27 comporte une alimentation autonome, représentée par une batterie B constituant un bloc d'alimentation électrique autonome pour la station relais 2 ainsi constituée.

En ce qui concerne les antennes 21 et 22, on indique que celles-ci peuvent être constituées par un ensemble de dipôles rayonnants convenablement orientés.

Enfin, en référence à la figure 4 et dans un mode de réalisation non limitatif, on indique que la station terminale 3 peut comporter une antenne directionnelle 30, de type antenne hyperfréquence, dont la direction du lobe de rayonnement en émission/réception Y-Y correspond sensiblement à la direction longitudinale du milieu confiné, l'antenne 30 pouvant être semblable à l'antenne 21 ou 22 représentée en figure 3 relativement à la station relais transportable. L'antenne 30, montée sur le trépied 31, est reliée par un câble coaxial à un boîtier étanche 32, lequel comporte un transpondeur assurant la transposition de ce signal hyperfréquence amplifié en signal transposé à haute fréquence pour la voie ascendante, respectivement l'opération inverse pour la voie descendante, ainsi que représenté de manière illustrative sur la figure 4. Les transpondeurs 34 et 35 sont reliés à l'antenne HF 33 et par le câble coaxial à l'antenne 30.

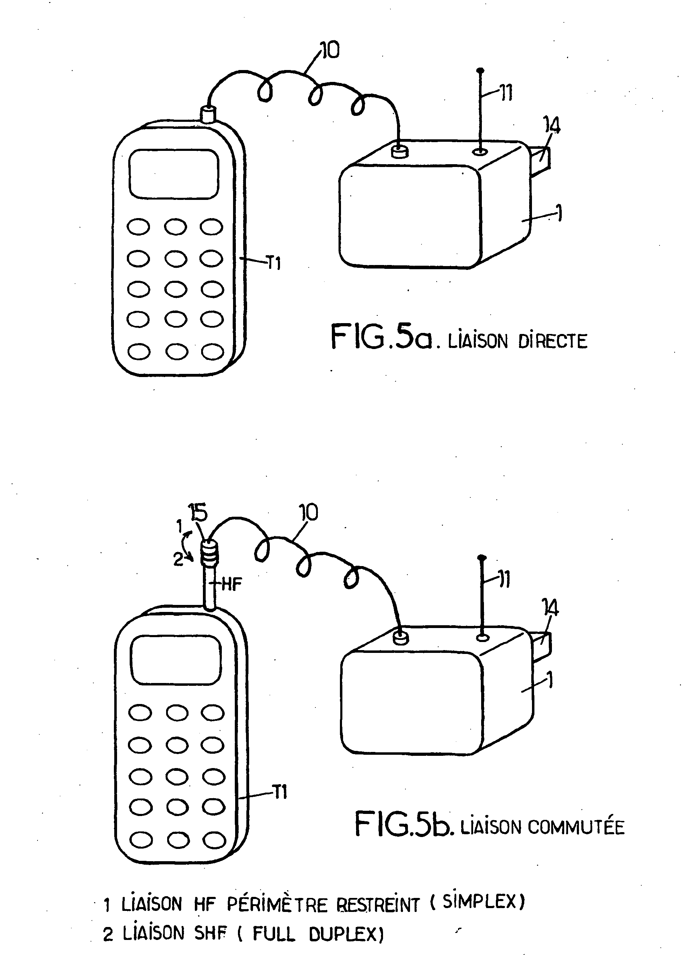

Une description plus détaillée d'un mode de réalisation préférentiel d'un module portatif individuel et du mode de connexion de ce module portatif individuel 1 à un terminal de téléphonie mobile sera maintenant décrit en liaison avec la figure 5a, respectivement 5b.

Sur la figure 5a, on a représenté une liaison directe entre le module individuel portatif 1 et un terminal de téléphonie mobile, tel que le terminal T₁ par exemple. Dans ce mode de réalisation, l'antenne HF du terminal de téléphonie mobile T₁ a été ôtée, ce type de terminal de téléphonie mobile comportant une antenne susceptible d'être soit enfichée soit vissée dans une prise de connexion adaptée à cet effet pour assurer la transmission des signaux HF émis par le terminal de téléphonie mobile T₁. Dans ces conditions et après suppression de l'antenne HF précitée, le câble coaxial 10 muni d'une prise de connexion également adaptée à cet effet peut être connecté en lieu et place de l'antenne HF précitée, ce qui permet d'assurer une liaison permanente entre le terminal de téléphonie mobile considéré T₁ et le module portatif individuel 1 associé à ce dernier.

Toutefois, et selon un aspect particulièrement avantageux du système objet de la présente invention, on indique que chaque module portatif individuel 1 peut comprendre un dispositif de connexion au terminal de téléphonie mobile T₁ spécialement adapté, de manière à permettre, d'une part, la communication de terminal de téléphonie mobile à terminal de téléphonie mobile dans un périmètre restreint, tel que le périmètre d'intervention ou de chantier représenté en figure 1, et, d'autre part, la communication par l'intermédiaire du module portatif individuel 1 avec la station relais transportable et la station terminale 3.

Ce mode de réalisation est représenté en figure 5b dans lequel l'antenne HF du terminal de téléphonie mobile T₁ est non pas supprimée, mais équipée d'un adaptateur/ commutateur, portant la référence 15, et assurant la liaison entre le câble coaxial 10 et l'antenne HF précitée. L'adaptateur/commutateur 15 peut comprendre deux positions, notées 1, respectivement 2, chaque position de commutation pouvant être choisie par l'utilisateur de l'ensemble formé par le terminal téléphonique mobile T₁, respectivement le module portatif individuel 1 qui lui est associé.

Dans ces conditions, le terminal de téléphonie mobile T₁ étant muni d'une fonction de communication simplex vis-à-vis d'un autre terminal de téléphonie mobile tel que le terminal T₂ représenté en figure 1 par exemple, cette fonction de communication simplex permet l'échange successif de messages sur une fréquence unique entre les terminaux T₁ et T₂ de téléphonie mobile dans le périmètre restreint qu'est le périmètre de chantier ou d'intervention tel que représenté en figure 1. On indique que ce périmètre restreint correspond à une distance entre terminal de téléphonie mobile T₁ et T₂ de l'ordre de 40 mètres environ, lorsque le tunnel est un tunnel sensiblement rectiligne et pour des conditions de propagation du signal HF en vision directe de terminal à terminal.

Ainsi, le câble coaxial 10 est connecté au module portatif individuel 1 alors que l'extrémité libre de ce câble coaxial est enfichable dans l'adaptateur/commutateur 15. Cette adaptateur/commutateur 15 permet d'assurer sur commutation, soit en position 1 par exemple, pour une liaison radioélectrique haute fréquence entre le terminal de téléphonie mobile T₁ et le module portatif individuel 1 qui lui est associé, soit en position de commutation 2, en l'absence de liaison radioélectrique en haute fréquence entre ce terminal de téléphonie mobile T₁ et le module portatif individuel 1, mais en présence au contraire d'une liaison de communication simplex vis-à-vis de l'autre terminal T₂ de téléphonie mobile dans le périmètre restreint précité.

Des essais comparatifs ont en outre été effectués dans un tunnel routier, le tunnel routier de Caluire à Lyon, long de 4 km.

Les essais précités ont montré l'existence d'une très bonne liaison phonique sur une distance totale de l'ordre de 4500 m, car le signal hyperfréquence amplifié continuait à présenter de bonnes qualités de directivité vis-à-vis de l'orientation de l'antenne 30 de la station terminale 3, le signal continuant en quelque sorte d'exister en dehors du tunnel sur une distance non négligeable. A titre d'exemple non limitatif, on indique que, en atmosphère confinée et lors de l'utilisation d'un signal haute fréquence HF à 160 MHz, la liaison vis-à-vis de l'ouverture libre OL du tunnel ne pouvait excéder 180 à 200 m.

## Revendications

1. Système de liaison radioélectrique en milieu confiné entre au moins un terminal de téléphonie mobile (T₁, T₂), émettant et recevant un signal radioélectrique à haute fréquence, et une borne fixe de téléphonie cellulaire, **caractérisé en ce qu'**il comporte en combinaison :
- un module portatif individuel (1) connecté à ce terminal de téléphonie mobile (T₁, T₂) et comportant un transpondeur hyperfréquence, ce module portatif individuel (1) recevant le signal radioélectrique à haute fréquence émis par le terminal de téléphonie mobile et réémettant, dans le milieu confiné, un signal radioélectrique hyperfréquence ;
- au moins une station relais transportable (2), assurant une réamplification du signal radioélectrique hyperfréquence et une réémission vers une ouverture libre (OL) dudit milieu confiné d'un signal radioélectrique hyperfréquence amplifié ;
- une station terminale (3) munie d'un transpondeur placée au voisinage de cette ouverture libre, ladite station terminale assurant la réception dudit signal radioélectrique hyperfréquence amplifié, la transposition de ce signal hyperfréquence amplifié en un signal transposé à haute fréquence et l'émission de ce signal transposé en milieu non confiné vers ladite borne fixe de téléphonie cellulaire par ladite ouverture libre.

2. Système selon la revendication 1, **caractérisé en ce que** le module portatif individuel (1), la station relais transportable (2) et la station terminale (3) assurent leurs opérations en combinaison selon une voie de transmission ascendante (F₁₁, F₂₁, F₃₁) respectivement une voie de transmission descendante (F₃₂. F₂₂, F₁₂).

3. Système selon la revendication 1 ou 2, **caractérisé en ce que** ladite station relais transportable (2) comprend au moins une antenne réceptrice (22) et une antenne émettrice (21) constituées chacune par une antenne directionnelle, dont la direction principale (YY) du lobe du rayonnement en émission/réception correspond sensiblement à la direction longitudinale du milieu confiné.

4. Système selon la revendication 3, **caractérisé en ce que** ladite station relais transportable (2) comprend un bloc d'alimentation électrique autonome.

5. Système selon l'une des revendications 1 à 4, **caractérisé en ce que** ledit module portatif individuel (1) comprend une antenne omnidirectionnelle (11).

6. Système selon l'une des revendications 1 à 5, **caractérisé en ce que** chaque module portatif individuel (1) comprend des moyens de connexion à un terminal de téléphonie mobile (T₁, T₂) permettant :
- la communication de terminal de téléphonie mobile (T₁) à terminal de téléphonie mobile (T₂) dans un périmètre restreint ;
- la communication par l'intermédiaire du module portatif individuel (1), avec la station relais transportable (2) et la station terminale (3).

7. Système selon la revendication 6, **caractérisé en ce que** ledit terminal de téléphonie mobile (T₁, T₂) étant muni d'une fonction de communication simplex vis-à-vis d'un autre terminal de téléphonie mobile, ladite fonction de communication simplex permettant l'échange successif de messages sur une fréquence unique entre lesdits terminaux de téléphonie mobile (T₁, T₂) dans ledit périmètre restreint, lesdits moyens de connexion à un terminal de téléphonie mobile dudit module portatif individuel comportent :
■ au niveau dudit terminal de téléphonie mobile (T₁, T₂):
- un adaptateur/commutateur (15) placé en extrémité de l'antenne dudit terminal de téléphonie mobile (T₁, T₂), et
■ au niveau dudit module portatif individuel:
- un câble coaxial (10) connecté audit module portatif individuel (1) et dont l'extrémité libre est munie d'une prise de connexion enfichable dans ledit adaptateur / commutateur (15), ledit adaptateur / commutateur (15) permettant d'assurer sur commutation soit une liaison radioélectrique en haute fréquence entre ledit terminal de téléphonie mobile (T₁, T₂) et ledit module portatif individuel (1), soit l'absence de liaison radioélectrique en haute fréquence entre ledit terminal de téléphonie mobile (T₁, T₂) et ledit module portatif individuel (1) et une liaison de communication simplex vis-à-vis d'un autre terminal (T₁, T₂) de téléphonie mobile dans ledit périmètre restreint.

8. Module portatif individuel pour terminal de téléphonie mobile (T₁, T₂), **caractérisé en ce qu'**il comporte un transpondeur hyperfréquence, ledit module (1) connecté au terminal de téléphonie mobile recevant le signal radioélectrique à haute fréquence émis par le terminal de téléphonie mobile et réémettant un signal radioélectrique hyperfréquence.

9. Module selon la revendication 8, **caractérisé en ce** qui celui-ci comprend une antenne omnidirectionelle (11).

## Claims

1. Radio link system in a confined environment between at least one mobile telephony terminal (T₁, T₂), transmitting and receiving a high frequency radio signal, and a fixed cellular telephony terminal, **characterised in that** it comprises in combination:
- an individual portable module (1) connected to this mobile telephony terminal (T₁, T₂) and comprising a microwave frequency transponder, this individual portable module (1) receiving the high frequency radio signal transmitted by the mobile telephony terminal and retransmitting a microwave frequency radio signal in the confined environment;
- at least one transportable relay station (2) ensuring re-amplification of the microwave frequency radio signal and retransmission towards a free opening (OL) of the said confined environment of an amplified microwave frequency radio signal;
- a terminal station (3) provided with a transponder and placed in the proximity of this free opening, the said terminal station ensuring reception of the said amplified microwave frequency radio signal, the transposition of this amplified microwave frequency signal into a high frequency transposed signal and the transmission of this transposed signal in an unconfined environment to the said fixed cellular telephony terminal via the said free opening.

2. System as claimed in claim 1, **characterised in that** the individual portable module (1), the transportable relay station (2) and the terminal station (3) carry out their operations in combination in accordance with an ascending transmission path (F₁₁, F₂₁, F₃₁) and a descending transmission path (F₃₂, F₂₂, F₁₂) respectively.

3. System as claimed in claim 1 or 2, **characterised in that** the said transportable relay station (2) comprises at least one receiving antenna (22) and a transmitting antenna (21) each formed by a directional antenna, the principal direction (YY) of the radiation lobe of which during transmission/reception corresponds substantially to the longitudinal direction of the confined environment.

4. System as claimed in claim 3, **characterised in that** the said transportable relay station (2) comprises a self-contained electric power supply unit.

5. System as claimed in any one of claims 1 to 4, **characterised in that** the said individual portable module (1) comprises an omnidirectional antenna (11).

6. System as claimed in any one of claims 1 to 5, **characterised in that** each individual portable module (1) comprises means for connection to a mobile telephony terminal (T₁, T₂) permitting:
- communication from mobile telephony terminal (T₁) to mobile telephony terminal (T₂) in a restricted perimeter;
- communication via the individual portable module (1) with the transportable relay station (2) and the terminal station (3).

7. System as claimed in claim 6, **characterised in that** the said mobile telephony terminal (T₁, T₂) being provided with a simplex communication function with respect to another mobile telephony terminal, the said simplex communication function permitting the successive exchange of messages at a single frequency between the said mobile telephony terminals (T₁, T₂) in the said restricted perimeter, the said means for connection to a mobile telephony terminal of the said individual portable module comprise:
■ at the said mobile telephony terminal (T₁, T₂):
- an adaptor/switch (15) placed at the end of the antenna of the said mobile telephony terminal (T₁, T₂), and
■ at the said individual portable module:
- a coaxial cable (10) connected to the said individual portable module (1) and of which the free end is provided with a connection plug which can be plugged into the said adaptor/switch (15), the said adaptor/switch (15) making it possible to ensure, upon switching, either a high frequency radio link between the said mobile telephony terminal (T₁, T₂) and the said individual portable module (1), or the absence of a high frequency radio link between the said mobile telephony terminal (T₁, T₂) and the said individual portable module (1) and a simplex communication link with respect to another mobile telephony terminal (T₁, T₂) in the said restricted perimeter.

8. Individual portable module for a mobile telephony terminal (T₁, T₂), **characterised in that** it comprises a microwave frequency transponder, the said module (1) connected to the mobile telephony terminal receiving the high frequency radio signal transmitted by the mobile telephony terminal and retransmitting a microwave frequency radio signal.

9. Module as claimed in claim 8, **characterised in that** this module comprises an omnidirectional antenna (11).

## Patentansprüche

1. Radioelektrisches Verbindungssystem im eingegrenzten Medium zwischen mindestens einem Mobiltelefonieterminal (T₁, T₂), das ein radioelektrisches Hochfrequenzsignal entsendet und empfängt, und einer festen Zelltelefonieklemme, **dadurch gekennzeichnet, dass** es in Kombination umfasst:
- ein tragbares Einzelmodul (1), das an dieses Mobiltelefonieterminal (T₁, T₂) angeschlossen ist und einen Hyperfrequenztransponder umfasst, wobei dieses tragbare Einzelmodul (1) das radioelektrische Hochfrequenzsignal empfängt, das vom Mobiltelefonieterminal entsandt wird, und in dem eingegrenzten Medium ein radioelektrisches Hyperfrequenzsignal wieder entsendet;
- mindestens eine transportable Relaisstation (2), die eine Wiederverstärkung des radioelektrischen Hyperfrequenzsignals und eine Wiederentsendung eines verstärkten radioelektrischen Hyperfrequenzsignals zu einer freien Öffnung (OL) des eingegrenzten Mediums gewährleistet;
- eine Endstation (3), die mit einem Transponder versehen ist, der in der Nähe dieser freien Öffnung angeordnet ist, wobei die Endstation den Empfang des verstärkten radioelektrischen Hyperfrequenzsignals, die Transposition dieses verstärkten Hyperfrequenzsignals in ein transponiertes Hochfrequenzsignal und das Entsenden dieses transponierten Signals in einem nicht eingegrenzten Medium zur festen Zelltelefonieklemme durch die freie Öffnung gewährleistet.

2. System nach Anspruch 1, **dadurch gekennzeichnet, dass** das tragbare Einzelmodul (1), die transportierbare Relaisstation (2) und die Endstation (3) ihre Schritt in Kombination entlang eines aufsteigenden Übertragungsweges (F₁₁, F₂₁, F₃₁) bzw. eines absteigenden Übertragungsweges (F₃₂, F₂₂, F₁₂) sicherstellen.

3. System nach Anspruch 1 oder 2, **dadurch gekennzeichnet, dass** die transportable Relaisstation (2) mindestens eine Empfangsantenne (22) und eine Sendeantenne (21) umfasst, die jeweils von einer Richtantenne gebildet sind, deren Hauptrichtung (YY) der Keule der Strahlung beim Senden/Empfangen im Wesentlichen der Längsrichtung des eingegrenzten Mediums entspricht.

4. System nach Anspruch 3, **dadurch gekennzeichnet, dass** die transportable Relaisstation (2) einen autonomen Stromversorgungsblock umfasst.

5. System nach einem der Ansprüche 1 bis 4, **dadurch gekennzeichnet, dass** das tragbare Einzelmodul (1) eine Rundstrahlantenne (11) umfasst.

6. System nach einem der Ansprüche 1 bis 5, **dadurch gekennzeichnet, dass** jedes tragbare Einzelmodul (1) Mittel zum Anschluss an ein Mobiltelefonieterminal (T₁, T₂) umfasst, die ermöglichen:
- die Kommunikation eines Mobiltelefonieterminals (T1) mit einem Mobiltelefonieterminal (T₂) in einem begrenzten Umfang;
- die Kommunikation mit Hilfe des tragbaren Einzelmoduls (1) mit der transportablen Relaisstation (2) und der Endstation (3).

7. System nach Anspruch 6, **dadurch gekennzeichnet, dass**, da das Mobiltelefonieterminal (T₁, T₂) mit einer Simplex-Kommunikationsfunktion gegenüber einem weiteren Mobiltelefonieterminal versehen ist, wobei die Simplex-Kommunikationsfunktion den aufeinander folgenden Austausch von Meldungen auf einer einzigen Frequenz zwischen den Mobiltelefonieterminals (T₁, T₂) in dem begrenzten Umfang ermöglicht, wobei die Anschlussmittel des tragbaren Einzelmoduls (1) an ein Mobiltelefonieterminal umfassen:
* im Bereich des Mobiltelefonieterminals (T₁, T₂):
- einen Adapter/Umschalter (15), der am Ende der Antenne des Mobiltelefonieterminals (T₁, T₂) angeordnet ist, und
* im Bereich des tragbaren Einzelmoduls:
- ein Koaxialkabel (10), das an das tragbare Einzelmodul (1) angeschlossen ist und dessen freies Ende mit einem Anschlussstecker versehen ist, der in den Adapter/Umschalter (15) einsteckbar ist, wobei es der Adapter/Umschalter (15) ermöglicht, bei Umschaltung entweder eine radioelektrische Hochfrequenzverbindung zwischen dem Mobiltelefonieterminal (T₁, T₂) und dem tragbaren Einzelmodul (1) oder das Fehlen einer radioelektrischen Hochfrequenzverbindung zwischen dem Mobiltelefonieterminal (T₁, T₂) und dem tragbaren Einzelmodul (1) und eine Simplex-Kommunikationsverbindung gegenüber einem weiteren Mobiltelefonieterminal (T₁, T₂) in dem begrenzten Umfang zu gewährleisten.

8. Tragbares Einzelmodul für ein Mobiltelefonieterminal (T₁, T₂), **dadurch gekennzeichnet, dass** es einen Hyperfrequenztransponder umfasst, wobei das an das Mobiltelefonieterminal angeschlossene Modul (1) das radioelektrische Hochfrequenzsignal empfängt, das vom Mobiltelefonieterminal entsandt wird, und wieder ein radioelektrisches Hyperfrequenzsignal entsendet.

9. Modul nach Anspruch 8, **dadurch gekennzeichnet, dass** dieses eine Rundstrahlantenne (11) umfasst.
